(19) Europäisches Patentamt
European Patent Office
Office européen des brevets

(11) **EP 1 291 540 B1**

(12) **EUROPEAN PATENT SPECIFICATION**

(45) Date of publication and mention
of the grant of the patent:
**27.10.2004 Bulletin 2004/44**

(51) Int Cl.⁷: **F16D 48/06**

(21) Application number: **02019053.4**

(22) Date of filing: **27.08.2002**

(54) **Multiple-disc electromagnetic clutch control system and method**

Steuerungssystem und -verfahren einer elektromagnetischen Mehrscheibenkupplung

Système et procédure de commande d'un embrayage électromagnétique à disques multiples

(84) Designated Contracting States:
**DE FR GB**

(30) Priority: **06.09.2001 JP 2001270052**

(43) Date of publication of application:
**12.03.2003 Bulletin 2003/11**

(73) Proprietor: **JATCO Ltd**
**Fuji-shi, Shizuoka 417-8585 (JP)**

(72) Inventors:
• **Yabe, Yasushi**
**Fuji-shi, Shizuoka 417-8585 (JP)**

• **Suzuki, Tsuyoshi**
**Fuji-shi, Shizuoka 417-8585 (JP)**

(74) Representative: **Grünecker, Kinkeldey,**
**Stockmair & Schwanhäusser Anwaltssozietät**
**Maximilianstrasse 58**
**80538 München (DE)**

(56) References cited:
**US-A- 5 362 287**      **US-A- 5 943 911**

• **PATENT ABSTRACTS OF JAPAN vol. 2000, no. 07, 29 September 2000 (2000-09-29) & JP 2000 110857 A (AICHI MACH IND CO LTD), 18 April 2000 (2000-04-18)**

**Description**

BACKGROUND OF THE INVENTION

The present invention relates to a multiple-disc electromagnetic clutch control system and method for controlling power transmission between an engine and an automatic transmission of a vehicle. A prior art clutch and method according to the preambles of claims 1 and 7 is known from US-A-5,943,911.

A clutch device is proposed, which comprises a main clutch, an electromagnetic pilot clutch and a cam mechanism. Upon engagement of the electromagnetic pilot clutch, the cam mechanism is operated by a torque transmitted thereto and generates a cam thrust force. The cam thrust force is applied to the main clutch via a press mechanism, thereby engaging the main clutch. In such a clutch device, the engagement of the electromagnetic pilot clutch is controlled through current regulation thereto, and the engaging force of the electromagnetic pilot clutch is increased by means of the cam mechanism. It is therefore possible not only to attain a large engaging force of the main clutch just by supplying a small current to the electromagnetic pilot clutch but also to control the engagement of the main clutch more closely through current regulation to the electromagnetic clutch than a conventional hydraulic clutch. For these reasons, attention is being given to the above-mentioned clutch device.

SUMMARY OF THE INVENTION

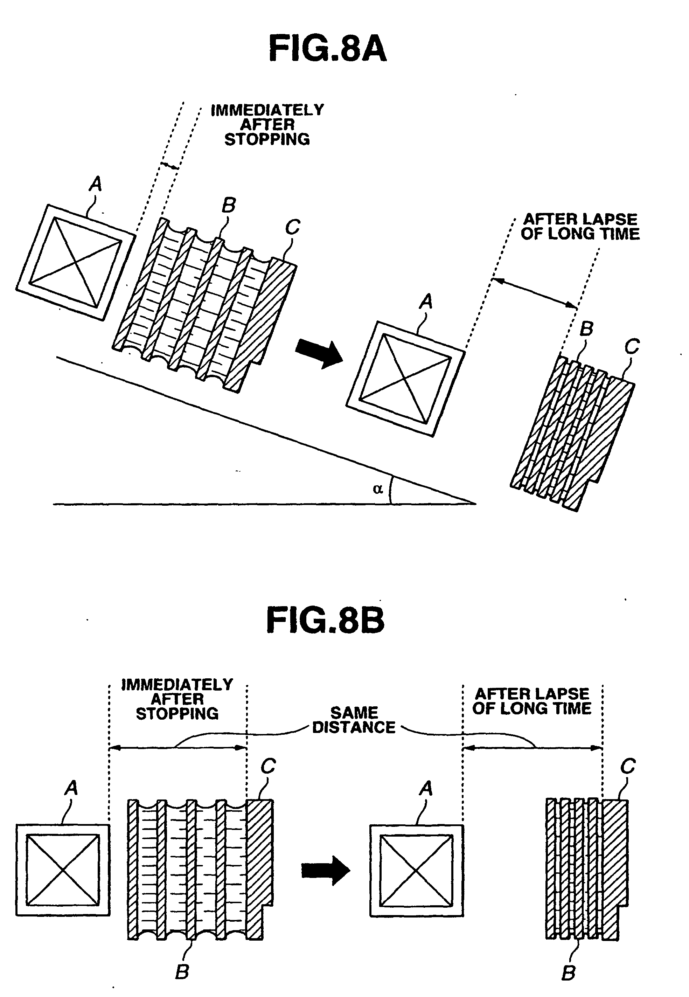

However, there arises a problem of failing to engage the electromagnetic pilot clutch in any of the following cases, when the above clutch device is employed in a vehicle to control power transmission from an engine to an automatic transmission. For explanation purposes, there is exemplified by the electromagnetic pilot clutch comprised of an electromagnet A, a plurality of clutch plates B and a retaining plate C and lubricated with a lubricating oil as shown in FIGS. 8A and 8B.

CASE 1: The vehicle is parked on e.g. a downhill road for a long time with its engine stopped and its body held at an angle α relative to a horizon. Immediately after stopping the vehicle, the clutch plates B are at some distance from the electromagnet A. With the passage of time, however, the clutch plates B and the retaining plate C are moved away from the electromagnet A under the weight of the lubricating oil as well as under their own weights as shown in FIG. 8A.

CASE 2: The vehicle is driven in a condition that the lubricating oil has reached a temperature of 80°C or higher, and then left standing for a long time with its engine stopped. The lubricating oil is in a state of thermally expanding immediately after stopping the vehicle, then gradually contracts with decrease in temperature and is dropped off. Herein, the retaining plate C is heavier in weight and has a larger sliding surface than the clutch plates B, thereby being liable to be acted upon by a larger frictional force via the sliding surface and allowed to stand still. As a result, the clutch plates B are shifted toward the retaining plate C (i.e. moved away from the electromagnet A) with the passage of time, as shown in FIG. 8B.

CASE 3: A magnetic field produced by the electromagnet A for the engagement of the pilot clutch causes a residual field to the clutch plates B and the retaining plate C, whereby the clutch plates B and the retaining plate C are attracted to each other. Then, the clutch plates B are shifted toward the retaining plate C because of the difference in their weights and sliding frictions as mentioned in CASE 2.

Thus, it is an object of the present invention to provide a multiple-disc electromagnetic clutch control system and method for controlling power transmission between an engine and an automatic transmission of a vehicle, by which the multiple-disc electromagnetic clutch can be engaged unfailingly even when there is a relatively large intervening space between the electromagnet and the clutch plates.

According to one aspect of the present invention, there is provided a multiple-disc electromagnetic clutch control system for controlling power transmission between an engine and an automatic transmission of a vehicle, the system comprising: a multiple-disc electromagnetic clutch having an electromagnet and a plurality of clutch plates; and a control unit for controlling engagement and disengagement of the multiple-disc electromagnetic clutch through current regulation to the multiple-disc electromagnetic clutch, the control unit having an adjusting section for adjusting, at start of the vehicle, an intervening space between the electromagnet and the clutch plates so that the intervening space falls within a predetermined range by executing an overexcitation control.

According to another aspect of the present invention, there is provided a multiple-disc electromagnetic clutch control method for controlling power transmission between an engine and an automatic transmission of a vehicle by engaging and disengaging a multiple-disc electromagnetic clutch through current regulation to the multiple-disc electromagnetic clutch, the multiple-disc electromagnetic clutch having an electromagnet and a plurality of clutch plates, the method comprising adjusting, at start of the vehicle, an intervening space between the electromagnet and the clutch plates so that the intervening space falls within a predetermined range through an overexcitation control.

BRIEF DESCRIPTION OF THE DRAWINGS

FIG. 1 is a cross-sectional view of an input clutch device provided with a multiple-disc electromagnetic clutch to which the present invention is applicable.

FIG. 2 is a flowchart for a program to execute an overexcitation control of the multiple-disc electromagnetic clutch according to a first embodiment of the present invention.

FIG. 3 is a flowchart illustrating the detailed procedure of step S106 of FIG. 2.

FIG. 4 is one example of map used to determine an overexcitation current and current supply time.

FIG. 5 is a timing chart for the overexcitation control according to the first embodiment of the present invention.

FIG. 6 is a flowchart for a program to execute an overexcitation control of the multiple-disc electromagnetic clutch according to a second embodiment of the present invention.

FIG. 7 is a flowchart showing the detailed procedure of step S106 of FIG. 6.

FIGS. 8A and 8B are schematic illustrations showing conventional problems that arise in the multiple-disc electromagnetic clutch.

DESCRIPTION OF THE EMBODIMENTS

The present invention will be described in detail with reference to the drawings.

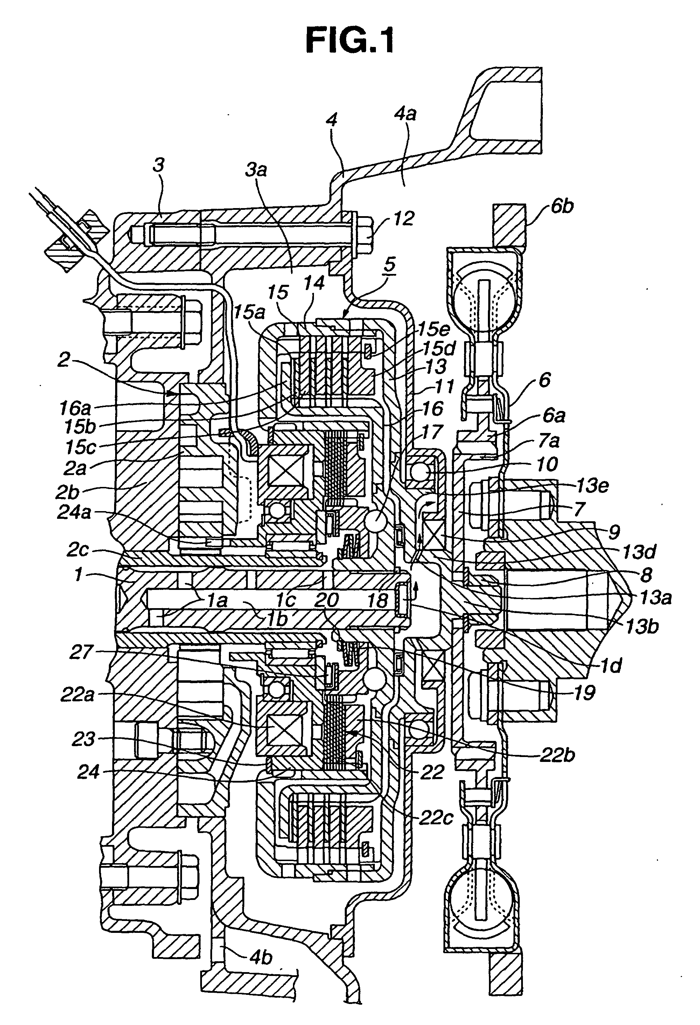

FIG. 1 is a cross-sectional view of an input clutch device 5 disposed between an engine and an automatic transmission of a vehicle so as to control power transmission from the engine to the automatic transmission according to one exemplary embodiment of the present invention. Herein, detailed explanations for the structures and operations of the engine and the automatic transmission will be omitted.

A clutch housing 4 in which the input clutch device 5 is disposed is mounted to a transmission case 3, and a front cover 11 is fastened to the clutch housing 4 with a bolt 12. A first open chamber 4a for installing therein a torsion damper 6 is defined by the clutch housing 4 and the front cover 11, while a second chamber 3a for lubricating the input clutch device 5 therein is defined by the transmission case 3, the clutch housing 4 and the front cover 11.

An oil pump 2 is disposed between the transmission case 3 and the clutch housing 4. In this embodiment, the oil pump 2 is a typical gear pump of which the internal gear pump elements are covered with a pump housing 2a and a pump cover 2b. A hollow sleeve 2c is engaged in the pump cover 2, and a transmission input shaft 1 of the automatic transmission is rotatably inserted in the hollow sleeve 2c with its end portion protruded in the clutch housing 4.

The input clutch device 5 is located around the protruded end portion of the transmission input shaft 1, and comprises an electromagnetic clutch 22, a multiple-disc clutch pack 15 on an outer circumferential side of the electromagnetic clutch 22, a loading cam 17 on an inner circumferential side of the electromagnetic clutch 22 and a clutch hub 16.

The clutch pack 15 includes a floating plate 15a and an alternating series of facing plates 15b and metal plates 15c placed between clutch drums 13 and 14.

The clutch drum 13 includes a first shaft portion 13b to which a power input hub 7 is fixed with a nut 8, a second shaft portion 13d held in sliding contact with an oil seal member 9 and a supported portion 13e at which the clutch drum 13 is supported by the front cover 11 via a bearing 10. The power input hub 7 is engaged with an output member 6a of the torsion damper 6 via a splined portion 7a so that the power input hub 7 and the output member 6a can rotate as a single unit. The clutch drums 13 and 14 are splined to each other.

Each of the facing plates 15b has friction facings attached on both sides thereof. The facing plates 15b are engaged with the clutch hub 16 so that the facing plates 15b and the clutch hub 16 can rotate about the transmission input shaft 1 as a single unit, while the metal plates 15c are engaged with the clutch drum 14 so that the metal plates 15c and the clutch drum 14 can rotate about the transmission input shaft 1 as a single unit. Further, the clutch pack 15 is equipped with a stepped retainer 15d and a snap ring 15e so that the snap ring 15e restricts the axial movement of the facing plates 15b and the metal plates 15c in a rightward direction of FIG. 1 via the retainer 15d.

The electromagnetic clutch 22 functions as a pilot clutch, and comprises an electromagnet 22a, a retaining plate 22b, a plurality of clutch plates 22c and a rotor 24. Further, the rotor 24 is engaged with the clutch drum 14 so that the rotor 24 and the clutch drum 14 can rotate about the transmission input shaft 1 as a single unit, and equipped with a stopper 23. An end 24a of the rotor 24 functions as a driving pawl of the oil pump 2.

The clutch hub 16 is splined to the transmission input shaft 1 and equipped with a snap ring 18 so that the snap ring 18 restricts the axial movement of the clutch hub 16 in a rightward direction of FIG. 1.

The engine power is transmitted to the clutch drums 13 and 14 (i.e. the driving part) via the torsion damper 6 integral with a drive plate 6b and the power input hub 7 and then transmitted to the rotor 24. When the electromagnet 22a is supplied with an excitation current and thereby generates an electromagnetic field, the retaining plate 22b and the clutch plates 22c are attracted to the electromagnet 22a and forced together. The electromagnetic clutch 22 is thus engaged so as to output the engine power as a torque Tp to the loading cam 17. The torque Tp is given by the following expression:

$$Tp = M \times E \times \mu \times r \times n$$

where M is a magnetic force produced by the electromagnet 22a upon excitation thereof; E is a magnetic path efficiency with which the magnetic force of the electromagnet 22a acts on the retaining plate 22b and the clutch plates 22c; $\mu$ is a coefficient of friction of the plates 22b and 22c; r is a mean radius of the frictional surfaces of the plates 22b and 22c; and n is the number of the frictional surfaces.

The magnetic path efficiency varies depending on the fact that the retaining plate 22b and the clutch plates 22c are surface treated and the areas of their frictional surfaces are not consistent with theoretical values owing to surface roughness and lubrication holes.

Then, the loading cam 17 converts the torque Tp into a cam thrust force that forces the clutch hub 16 to move in a rightward direction of FIG. 1 by the cam action of rolling balls on sloping surfaces. In reaction to the cam thrust force, there is produced a thrust force that forces, via a thrust bearing 27, the clutch drum 14 to move in a leftward direction of FIG. 1 together with the rotor 24 and the electromagnet 22a against the spring tension of a return spring 19. The return spring 19 is fixed with a snap spring 20. As the axial movement of the clutch hub 16 is restricted by the snap ring 18, the clutch drum 14 is eventually moved in the leftward direction of FIG. 1. It follows that the facing plates 15b and the metal plates 15c are forced together to establish the engagement of the clutch pack 15, whereby the engine power is transmitted to the transmission input shaft 1 through the clutch hub 16 (i.e. the driven part).

The clutch pack 15, the electromagnetic pilot clutch 22 and the loading cam 17 are lubricated with a lubricating oil through a control valve (not shown). A conventional lock-up control valve can be used as such a control valve. More specifically, the lubricating oil is supplied by the centrifugal pumping action of the oil pump 2 through openings 1a, a hollow portion 1b and openings 1c and 1d of the transmission input shaft 1 and openings 13a of the clutch drum 13 to lubricate the input clutch device 5. Then, the lubricating oil flows through a plurality of openings (not shown) formed in the clutch drums 13 and 14 into a space sealed by the clutch housing 4 and the front cover 11 and returns to an oil pan (not shown) provided on the transmission side via a drain port 4b formed in the clutch housing 4.

The operation of the input clutch device 5 is controlled by means of a control unit. That is, the control unit controls the engagement and disengagement of the electromagnetic clutch 22 through current regulation thereto, thereby moving the clutch pack 15 into engagement and disengagement by operation of the loading cam 17 as described above.

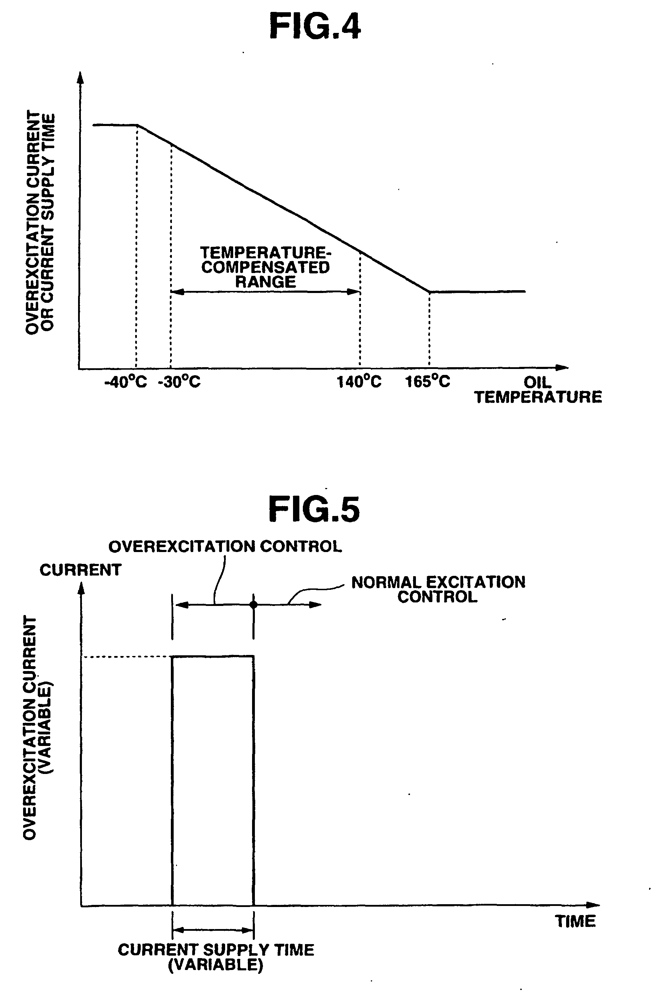

In order to engage the electromagnetic clutch 22 unfailingly, the control unit performs an overexcitation control at start of the vehicle for adjusting an intervening space between the electromagnet 22a and the clutch plates 22c so that the intervening space falls within a predetermined range. The overexcitation control is generally carried out before a normal excitation control by which the electromagnetic clutch 22 is engaged (refer to FIG. 5).

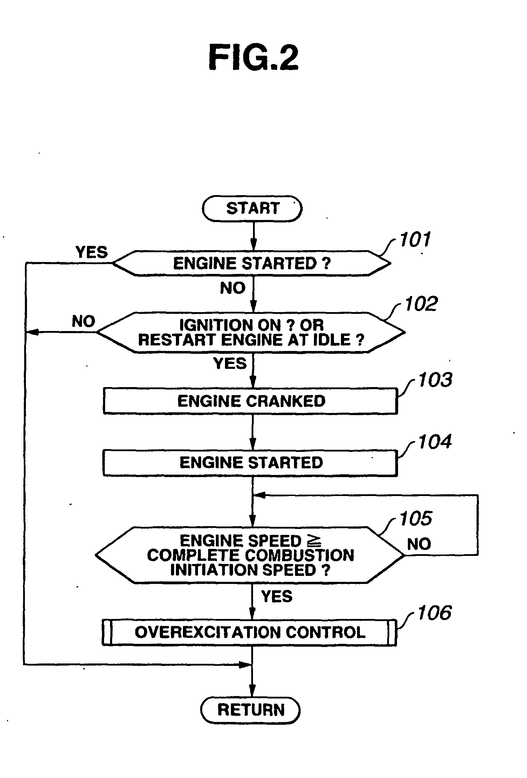

FIG. 2 is a flowchart for a program to execute the overexcitation control according to a first embodiment of the present invention.

The control unit of the first embodiment has an adjusting section, an engine speed regulating section, an overexcitation condition determining section and an engagement control section. Further, the control unit is configured so that the engine speed regulating section receives input about an engine speed from an engine-speed sensor and the overexcitation condition determining section receives input about a temperature of the lubricating oil in the automatic transmission from an oil-temperature sensor.

In step S101, it is determined whether the engine has been started. If Yes in step S101, control returns to start. If No in step S101, it is determined whether an ignition switch is turned on or, when the engine is running at idle, whether there is a command from an idle stop control unit to restart the engine in step S102. (In this embodiment, the control unit also functions as the idle stop control unit.) If No in step S102, control returns to start. If Yes in step S102, the engine is cranked in step S103. In step S104, the engine starts running under its own power without recourse to a starting motor of the vehicle. In step S105, an engine speed is detected with the engine-speed sensor, and then it is determined whether the detected engine speed is higher than or equal to a complete combustion initiation speed (usually 500 rpm) by means of the engine speed regulating section. The engine speed higher than or equal to the complete combustion initiation speed means that complete combustion takes place in the engine 100. If Yes in step S105, the overexcitation control is executed by means of the adjusting section in step S106. By performing the overexcitation control upon detection of the complete combustion initiation speed, the proper operation of the electromagnetic clutch 22 can be insured immediately after complete combustion is initiated.

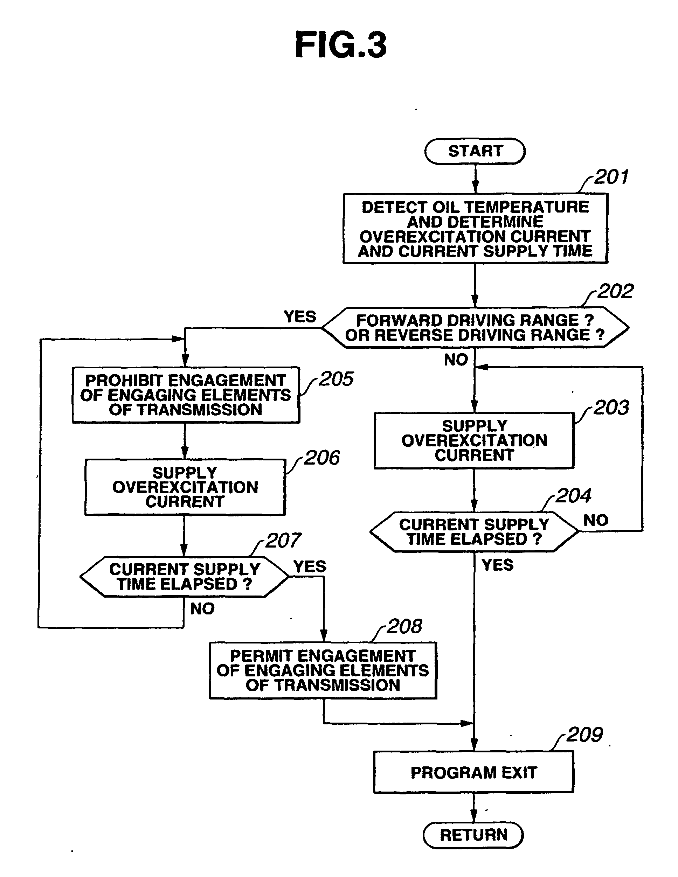

FIG. 3 is a flowchart showing the detailed procedure of step S106 of FIG. 2.

In step S201, a temperature of the lubricating oil in the automatic transmission is detected with the oil-temperature sensor, and then an overexcitation current and current supply time are determined based on the detected oil temperature by means of the overexcitation condition determining section. The overexcitation current and current supply time can be determined by the use of a map as shown in FIG. 4 and a linear relationship between the overexcitation current and the current supply time given by the following expression: $t = k \times I$, where I is the overexcitation current; t is the current supply time; and k is a constant set for the automatic transmission. The electromagnetic clutch 22 is lubricated and the operation of the electromagnetic clutch 22 is influenced by the viscosity of the lubricating oil. As the viscosity of the lubricating oil decreases with increase in the oil temperature, the overexcitation current and the current supply time are determined so as to decrease with increasing the oil temperature. This makes it possible to avoid supplying an excessive current supply and to reduce the load on a battery of the vehicle while insuring the proper actuation of the electromagnetic clutch 22. In addition, the temperature-compensated range of the automatic transmission is generally from -30°C to 140°C. Thus, an upper limit or a lower limit are set on the overexcitation current and the current supply time by means of the overexcitation condition determining section, when the detected oil temperature is not within a range from -40°C to 165°C. This makes it possible to avoid the overexcitation control at an extremely large or small overexcitation current even when the oil temperature sensor is at fault. The determined overexcitation current and current supply time are outputted from the overexcitation condition determining section to the adjusting section.

In step S202, it is determined whether a gearshift lever of the transmission has been moved into any driving range, such as DRIVE, LOW or REVERSE. If No in step S202, control goes to step S203. If Yes in step S202, control goes to step S205.

In step S203, the supply of the overexcitation current determined in step S201 from the battery to the electromagnet 22a is permitted by means of the adjusting section. Then, it is determined by means of the adjusting section whether a predetermined time, i.e., the current supply time determined in step S201 has elapsed since the start of current supply in step S204. If Yes in step S204, the overexcitation control is terminated. Then, control goes to step S209. If No in step S204, control returns to step S203.

In step S205, the engagement of engaging elements of the automatic transmission is prohibited by means of the engagement control section. The engaging elements of the automatic transmission include e.g. a forward or reverse clutch. In step S206, the supply of the overexcitation current determined in step S201 from the battery to the electromagnet 22a is permitted by means of the adjusting section. In step S207, it is determined by means of the adjusting section whether a predetermined time, i.e., the current supply time determined in step S201 has elapsed since the start of current supply. If No in step S207, control returns to step S205. If Yes in step S207, the overexcitation control is terminated. Then, the engagement of the engaging elements of the automatic transmission is permitted by means of the engagement control section in step S208. There may be a case where the gearshift lever is moved into any driving range soon after complete combustion is initiated. If the transmission has been shifted into gear before the overexcitation control or is shifted into gear during the overexcitation control, the engine power is suddenly transmitted to drive wheels upon engagement of the electromagnetic clutch 22, thereby raising great possibilities of sudden start, shaking or engine stall owing to the sudden application of load to the engine. However, the automatic transmission is prohibited from shifting into gear until the overexcitation control has completed as described above. Thus, sudden power transmission to the drive wheels can be avoided so as to perform creep and drive-off operations smoothly, even when the electromagnetic clutch 22 is suddenly engaged.

Finally, the program exits in step S209.

As described above, the intervening space between the electromagnet 22a and the clutch plates 22c is adjusted so as to fall within a predetermined range by the overexcitation control according to the present invention. It is thus possible to engage the electromagnetic clutch 22 unfailingly at start of the vehicle (i.e. at the time of starting the engine or restarting the engine at idle) by eliminating the possibility of failing to attract the clutch plates 22c to the electromagnet 22a and possible to perform creep and drive-off operations smoothly with current supply control.

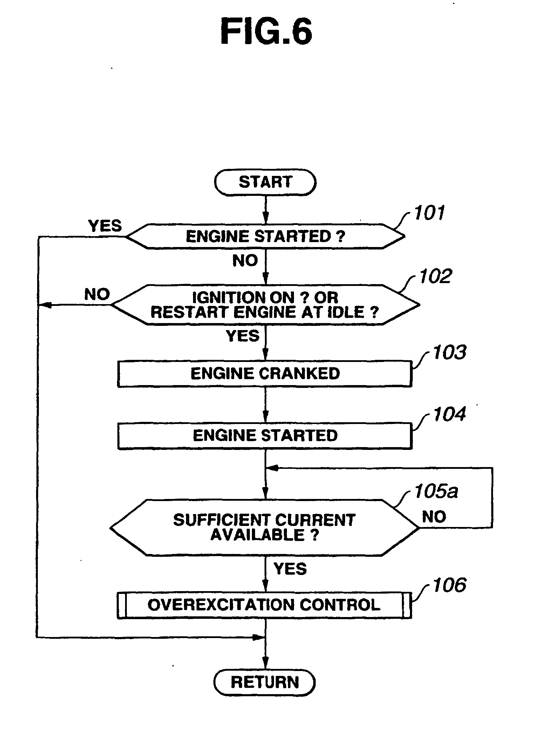

FIG. 6 is a flowchart for a program to execute the overexcitation control according to a second embodiment of the present invention. As the second embodiment is similar to the first embodiment, the following explanation will be directed to only steps that are different from the first embodiment.

The control unit of the second embodiment further has a current regulating section, a sensor failure detecting section and a failure control section. Further, the control unit is configured so that the current regulating section can monitor a current of the starting motor.

After the engine starts running under its own power in step S104, it is determined whether sufficient electric current for the overexcitation control is available, while monitoring the current of the starting motor, by means of the current regulating section in step S105a. This is based on the fact that the current of the starting motor is decreased at the time of starting the engine. Alternatively, the current of the battery may be monitored so as to determine whether sufficient current for the overexcitation control is available. If Yes in step S105a, the overexcitation control is executed by means of the adjusting section in step S106.

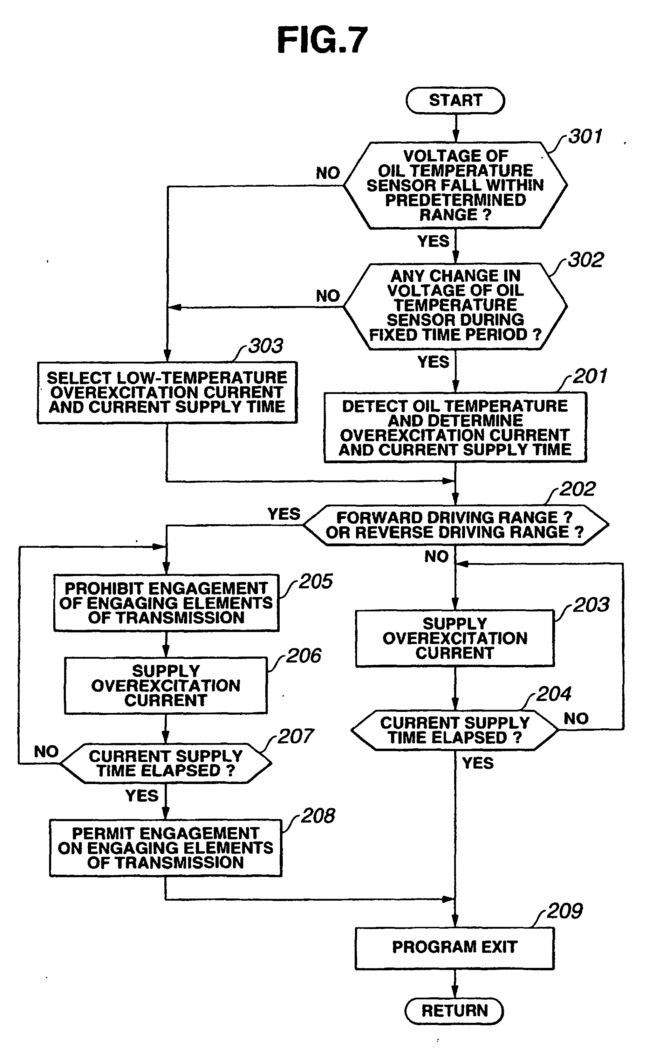

FIG. 7 is a flowchart showing the detailed procedure of step S106 of FIG. 6.

In step S301, it is determined whether the voltage of the oil temperature sensor is within a predetermined voltage range by means of the sensor failure detecting section. If No in step S301, control goes to step S303. If Yes in step S301, it is further determined whether there is any change in the voltage of the oil temperature sensor during a fixed time period by means of the sensor failure detecting section in step S302. If No in step S302, control goes to step S303. If Yes in step S302, control goes to step S201. In step S303, it is judged that the oil temperature sensor is faulty by means of the sensor failure detecting section, and then a predetermined low-temperature overexcitation current and current supply time are selected by means of the failure control section. The low-temperature overexcitation current and current supply time are determined so that the proper actuation of the electromagnetic clutch 22 can be insured even when the viscosity of the lubricating oil is extremely high. The selected low-temperature overexcitation current and current supply time are outputted from the failure control section to the adjusting section. Then, control goes to step S202.

In the second embodiment, the overexcitation control is started after ensuring that sufficient current is available. Upon such active current monitoring, the overexcitation control is carried out more assuredly. Further, even when the oil temperature cannot be detected owing to a failure of the oil temperature sensor, the overexcitation control can be performed based on the predetermined low-temperature overexcitation current and current supply time, whereby the proper actuation of the electromagnetic clutch 22 can be insured.

The above embodiments refer to a multiple-disc electromagnetic clutch control system and method for controlling power transmission from an engine to an automatic transmission of a vehicle. However, the present invention can be applied to e.g. a control system and method for a variable center differential provided with a multiple-disc electromagnetic clutch so as to permit power-flow to four drive wheels at different rates of wheel rotations.

Although the invention has been described with reference to the specific embodiments thereof, the invention is not limited to the above-described embodiments. Various modification and variation of the embodiments described above will occur to those skilled in the art in light of the above teaching. The scope of the invention is defined with reference to the following claims.

## Claims

1. A multiple-disc electromagnetic clutch control system for controlling power transmission between an engine and an automatic transmission of a vehicle, the system comprising:

   a multiple-disc electromagnetic clutch (22) having an electromagnet (22a) and a plurality of clutch plates (22c); and
   a control unit for controlling engagement and disengagement of the multiple-disc electromagnetic clutch (22) through current regulation to the multiple-disc electromagnetic clutch (22), **characterised in that**
   the control unit has an adjusting section for adjusting, at start of the vehicle, an intervening space between the electromagnet (22a) and the clutch plates (22c) so that the intervening space falls within a predetermined range by executing an overexcitation control.

2. A multiple-disc electromagnetic clutch control system according to Claim 1, further comprising an engine-speed sensor for detecting an engine speed, wherein the control unit has a engine speed regulating section for determining whether the detected engine speed is higher than or equal to a predetermined speed and, when the detected engine speed is higher than or equal to the predetermined speed, enables the adjusting section to execute the overexcitation control.

3. A multiple-disc electromagnetic clutch control system according Claim 1, wherein the control unit has a current regulating section for determining whether sufficient current is available for the overexcitation control and, when available, enables the adjusting section to execute the overexcitation control.

4. A multiple-disc electromagnetic clutch control system according to any of Claims 1 to 3, further comprising an oil temperature sensor for detecting a temperature of lubricating oil in the automatic transmission,

   wherein the control unit has an overexcitation condition determining section for determining an overexcitation current and current supply time based on the detected oil temperature and enabling the adjusting section to execute the overexcitation control in accordance with the determined overexcitation current and current supply time.

5. A multiple-disc electromagnetic clutch control system according to any of Claims 1 to 4, wherein the control unit has an engagement control section for prohibiting engagement of engaging elements of the automatic transmission until the overexcitation control has completed.

6. A multiple-disc electromagnetic clutch control system according to Claim 4, wherein the control unit has a sensor failure detecting section for judging whether the oil temperature sensor is at fault, and a failure control section for, when the sensor failure detecting section judges the oil temperature sensor faulty, enabling the adjusting section to execute the overexcitation control in accordance with a predetermined low-temperature overexcitation current and current supply time.

7. A multiple-disc electromagnetic clutch control method for controlling power transmission between an engine and an automatic transmission of a vehicle by engaging and disengaging a multiple-disc electromagnetic clutch (22) through current regulation to the multiple-disc electromagnetic clutch (22), the multiple-disc electromagnetic clutch having an electromagnet (22a) and a plurality of clutch plates (22c), **characterised in that**
   the method comprises adjusting, at start of the vehicle, an intervening space between the electromagnet (22a) and the clutch plates (22c) so that the intervening space falls within a predetermined range through an overexcitation control.

**8.** A multiple-disc electromagnetic clutch control method according to Claim 7, further comprising:

detecting an engine speed with an engine-speed sensor;
determining whether the detected engine speed is higher than or equal to a predetermined speed; and
when the detected engine speed is higher than or equal to the predetermined speed, enabling the overexcitation control.

**9.** A multiple-disc electromagnetic clutch control method according Claim 7, further comprising:

determining whether sufficient current is available for the overexcitation control; and
when sufficient current is available for the overexcitation control, enabling the overexcitation control.

**10.** A multiple-disc electromagnetic clutch control method according to any of Claims 7 to 9, further comprising:

detecting a temperature of lubricating oil in the automatic transmission with an oil-temperature sensor;
determining an overexcitation current and current supply time based on the detected oil temperature; and
enabling the overexcitation control in accordance with the determined overexcitation current and current supply time.

**11.** A multiple-disc electromagnetic clutch control method according to any of Claims 7 to 10, further comprising prohibiting engagement of engaging elements of the automatic transmission until the overexcitation control has completed.

**12.** A multiple-disc electromagnetic clutch control method according to Claim 10, further comprising:

judging whether the oil temperature sensor is at fault; and
when the oil temperature sensor is judged faulty, enabling the overexcitation control in accordance with a predetermined low-temperature overexcitation current and current supply time.

**Patentansprüche**

**1.** Steuersystem für eine elektromagnetische Mehrscheibenkupplung zum Steuern der Leistungsübertragung zwischen einem Motor und einem automatischen Getriebe eines Fahrzeuges, wobei das System aufweist:

eine elektromagnetisches Mehrscheibenkupplung (22), die einen Elektromagneten (22a) und eine Mehrzahl von Kupplungsplatten (22c) hat; und
eine Steuerungseinheit zum Steuern des Eingreifens oder des Lösens der elektromagnetischen Mehrscheibenkupplung (22) durch Stromregulierung zu der elektromagnetischen Mehrscheibenkupplung (22), **dadurch gekennzeichnet, dass**
die Steuerungseinheit einen Einstellabschnitt hat, um beim Start des Fahrzeuges einen zwischen dem Elektromagneten (22a) und den Kupplungsplatten (22c) zwischenliegenden Raum einzustellen, so dass der dazwischenliegende Raum innerhalb eines vorbestimmten Bereiches fällt, durch Ausführen einer Übererregungssteuerung.

**2.** Steuersystem für eine elektromagnetische Mehrscheibenkupplung nach Anspruch 1, außerdem mit einem Motordrehzahlsensor zum Erfassen der Motordrehzahl,
wobei die Steuerungseinheit einen Motordrehzahl- Regulierungsabschnitt hat, um zu bestimmen, ob die erfasste Motordrehzahl höher oder gleich zu einer vorbestimmten Drehzahl ist, wobei wenn die erfasste Motordrehzahl höher als oder gleich zu der vorbestimmten Drehzahl ist, der Einstellabschnitt ermöglicht, die Übererregungssteuerung auszuführen.

**3.** Steuersystem für eine elektromagnetische Mehrscheibenkupplung nach Anspruch 1, wobei die Steuerungseinheit einen Stromregulierungsabschnitt hat, um zu bestimmen, ob ein ausreichender Strom für die Übererregungssteuerung verfügbar ist, wobei, wenn er verfügbar ist, dem Einstellabschnitt ermöglicht wird, die Übererregungssteuerung auszuführen.

**4.** Steuersystem für eine elektromagnetische Mehrscheibenkupplung nach einem der Ansprüche 1 bis 3, außerdem mit einem Öltemperatursensor zum Erfassen einer Temperatur von Schmieröl in dem automatischen Getriebe,
wobei die Steuerungseinheit einen Übererregungszustand- Bestimmungsabschnitt zum Bestimmen eines Übererregungsstromes hat, und einer Stromzuführungszeit auf der Grundlage der erfassten Öltemperatur und die dem Einstellabschnitt ermöglicht, der Übererregungssteuerung in Übereinstimmung mit den bestimmten Übererregungsstrom und der Stromzuführungszeit auszuführen.

**5.** Steuersystem für eine elektromagnetische Mehrscheibenkupplung nach einem der Ansprüche 1 bis 4, wobei die Steuerungseinheit einen Eingriffssteuerungsabschnitt für das Verbieten des Eingriffs der Eingriffselemente des automatischen Getriebes hat, bis die Übererregungssteuerung abgeschlossen ist.

**6.** Steuersystem für eine elektromagnetische Mehrscheibenkupplung nach Anspruch 4, wobei die Steuerungseinheit einen Sensorfehler- Erfassungsabschnitt hat, um zu entscheiden, ob der Öltemperatursensor fehlerhaft ist, und einen Fehlersteuerungsabschnitt um, wenn der Sensorfehler-Erfassungsabschnitt entscheidet, dass der Öltemperatursensor fehlerhaft ist, dem Einstellabschnitt zu ermöglichen, die Übererregungssteuerung in Übereinstimmung mit einem vorbestimmten Niedrigtemperatur- Übererregungsstrom und der Stromzuführungszeit auszuführen.

**7.** Steuerverfahren für eine elektromagnetische Mehrscheibenkupplung zum Steuern der Leistungsübertragung zwischen einem Motor und einem automatischen Getriebe eines Fahrzeuges durch Eingreifen oder Lösen einer elektromagnetischen Mehrscheiben- Kupplung (22) durch Stromregulierung zu der elektromagnetischen Mehrscheiben-Kupplung (22), wobei die elektromagnetischen Mehrscheiben- Kupplung einen Elektromagneten (22a) und eine Mehrzahl von Kupplungsplatten (22c) hat, **dadurch gekennzeichnet, dass**

das Verfahren beim Start des Fahrzeuges das Einstellen eines zwischen dem Elektromagneten (22a) und den Kupplungsplatten (22c) zwischenliegenden Raumes aufweist, so dass der dazwischenliegende Raum innerhalb eines vorbestimmten Bereiches durch eine Übererregungssteuerung fällt.

**8.** Steuerverfahren für eine elektromagnetische Mehrscheibenkupplung nach Anspruch 7, das außerdem aufweist:

Erfassen einer Motordrehzahl mit einem Motordrehzahlsensor;
Bestimmen ob die erfasste Motordrehzahl höher als oder gleich zu einer vorbestimmten Drehzahl ist; und dann,
wenn die erfasste Motordrehzahl höher als oder gleich zu der vorbestimmten Drehzahl ist, Ermöglichen der Übererregungssteuerung.

**9.** Steuerverfahren für eine elektromagnetische Mehrscheibenkupplung nach Anspruch 7, das außerdem aufweist:

Bestimmen, ob ein ausreichender Strom für die Übererregungssteuerung verfügbar ist; und dann
wenn ausreichender Strom für die Übererregungssteuerung verfügbar ist, Ermöglichen der Übererregungssteuerung.

**10.** Steuerverfahren für eine elektromagnetische Mehrscheibenkupplung nach einem der Ansprüche 7 bis 9, das außerdem aufweist:

Erfassen einer Temperatur des Schmieröls in dem automatischen Getriebe mit einem Öltemperatursensor;
Bestimmen eines Übererregungsstromes und der Stromzuführungszeit auf der Grundlage der erfassten Öltemperatur; und
Ermöglichen der Übererregungssteuerung in Übereinstimmung mit dem bestimmten Übererregungsstrom und der Stromzuführungszeit.

**11.** Steuerverfahren für eine elektromagnetische Mehrscheibenkupplung nach einem der Ansprüche 7 bis 10, außerdem mit einem Verbieten des Eingriffs der Eingriffselemente des automatischen Getriebes, bis die Übererregungssteuerung abgeschlossen ist.

**12.** Elektromagnetisches Mehrscheiben- Kupplungsverfahren nach Anspruch 10, das außerdem aufweist:

Entscheiden, ob der Öltemperatursensors fehlerhaft ist; und
wenn entschieden wird, dass der Öltemperatursensor fehlerhaft ist, Ermöglichen der Übererregungssteuerung in Übereinstimmung mit einem vorbestimmten Niedrigtemperatur- Übererregungsstrom und der Stromzuführungszeit.

**Revendications**

**1.** Système de commande d'un embrayage électromagnétique à disques multiples pour commander une transmission de puissance entre un moteur et une transmission automatique d'un véhicule, le système comprenant :

un embrayage électromagnétique à disques multiples (22) ayant un électro-aimant (22a) et une pluralité de plateaux d'embrayage (22c) ; et
une unité de commande pour commander l'engagement et le désengagement de l'embrayage électromagnétique à disques multiples (22) par le biais d'une régulation du courant sur l'embrayage électromagnétique à disques multiples (22),

**caractérisé en ce que**

l'unité de commande possède une section de réglage pour régler, au démarrage du véhicule, un espace intervenant entre l'électro-aimant (22a) et les plateaux d'embrayage (22c) de telle sorte que l'espace intervenant tombe dans une marge prédéterminée par l'exécution d'une commande de surexcitation.

2. Système de commande d'un embrayage électromagnétique à disques multiples selon la revendication 1, comprenant en outre un capteur de vitesse du moteur pour détecter une vitesse du moteur,

où l'unité de commande possède une section de régulation de la vitesse du moteur pour déterminer si la vitesse du moteur détectée est supérieure ou égale à une vitesse prédéterminée et, lorsque la vitesse du moteur détectée est supérieure ou égale à la vitesse prédéterminée, permet à la section de réglage d'exécuter la commande de surexcitation.

3. Système de commande d'un embrayage électromagnétique à disques multiples selon la revendication 1, où l'unité de commande possède une section de régulation du courant pour déterminer si un courant suffisant est disponible pour la commande de surexcitation et, en cas de disponibilité, permet à la section de réglage d'exécuter la commande de surexcitation.

4. Système de commande d'un embrayage électromagnétique à disques multiples selon l'une quelconque des revendications 1 à 3, comprenant en outre un capteur de température d'huile pour détecter une température de l'huile lubrifiante dans la transmission automatique,

où l'unité de commande possède une section de détermination d'un état de surexcitation pour déterminer un courant de surexcitation et un moment d'alimentation de courant sur la base de la température de l'huile détectée et permettre à la section de réglage d'exécuter la commande de surexcitation conformément au courant de surexcitation et au moment d'alimentation de courant déterminés.

5. Système de commande d'un embrayage électromagnétique à disques multiples selon l'une quelconque des revendications 1 à 4, où l'unité de commande possède une section de commande d'engagement pour empêcher l'engagement d'éléments d'accouplement de la transmission automatique jusqu'à ce que la commande de surexcitation soit terminée.

6. Système de commande d'un embrayage électromagnétique à disques multiples selon la revendication 4, où l'unité de commande possède une section de détection de défaillance du capteur pour juger si le capteur de température d'huile est en défaillance, et une section de commande de défaillance pour, lorsque la section de détection de défaillance du capteur juge le capteur de température d'huile défaillant, permettre à la section de réglage d'exécuter la commande de surexcitation conformément à un courant de surexcitation à basse température et à un moment d'alimentation de courant prédéterminés.

7. Procédé de commande d'un embrayage électromagnétique à disques multiples pour commander une transmission de puissance entre un moteur et une transmission automatique d'un véhicule en engageant et en désengageant un embrayage électromagnétique à disques multiples (22) par le biais d'une régulation de courant sur l'embrayage électromagnétique à disques multiples (22), l'embrayage électromagnétique à disques multiples (22) ayant un électro-aimant (22a) et une pluralité de plateaux d'embrayage (22c),

**caractérisé en ce que**

le procédé comprend l'étape consistant à régler, au démarrage du véhicule, un espace intervenant entre l'électro-aimant (22a) et les plateaux d'embrayage (22c) de telle sorte que l'espace intervenant tombe dans une marge prédéterminée par le biais d'une commande de surexcitation.

8. Procédé de commande d'un embrayage électromagnétique à disques multiples selon la revendication 7, comprenant en outre les étapes consistant à :

détecter une vitesse de moteur avec un capteur de vitesse de moteur ;
déterminer si la vitesse de moteur détectée est supérieure ou égale à une vitesse prédéterminée ; et
lorsque la vitesse de moteur détectée est supérieure ou égale à la vitesse prédéterminée, permettre la commande de surexcitation.

9. Procédé de commande d'un embrayage électromagnétique à disques multiples selon la revendication 7, comprenant en outre les étapes consistant à :

déterminer si un courant suffisant est disponible pour la commande de surexcitation ; et
lorsqu'un courant suffisant est disponible pour la commande de surexcitation, permettre la commande de surexcitation.

10. Procédé de commande d'un embrayage électromagnétique à disques multiples selon l'une quelconque des revendications 7 à 9, comprenant en outre les étapes consistant à :

détecter une température de l'huile lubrifiante dans la transmission automatique avec un capteur de température d'huile ;

déterminer un courant de surexcitation et un moment d'alimentation de courant sur la base de la température d'huile détectée ; et

permettre la commande de surexcitation conformément au courant de surexcitation et au moment d'alimentation de courant déterminés.

11. Procédé de commande d'un embrayage électromagnétique à disques multiples selon l'une quelconque des revendications 7 à 10, comprenant en outre l'étape consistant à empêcher l'engagement d'éléments d'accouplement de la transmission automatique jusqu'à ce que la commande de surexcitation soit terminée.

12. Procédé de commande d'un embrayage électromagnétique à disques multiples selon la revendication 10, comprenant en outre les étapes consistant à :

juger si le capteur de température d'huile est en défaillance ; et

lorsque le capteur de température d'huile est jugé défaillant, permettre la commande de surexcitation conformément à un courant de surexcitation à basse température et à un moment d'alimentation de courant prédéterminés.

EP 1 291 540 B1

# FIG.1

# FIG.2

START

101
YES ENGINE STARTED ?

NO

102
NO IGNITION ON ? OR
RESTART ENGINE AT IDLE ?

YES

103
ENGINE CRANKED

104
ENGINE STARTED

105
ENGINE SPEED $\geqq$
COMPLETE COMBUSTION
INITIATION SPEED ?          NO

YES

106
OVEREXCITATION CONTROL

RETURN

# FIG.3

```
                              ┌─────────┐
                              │  START  │
                              └────┬────┘
                                   │              ╭201
                         ┌─────────▼──────────┐
                         │ DETECT OIL TEMPERATURE │
                         │    AND DETERMINE    │
                         │ OVEREXCITATION CURRENT │
                         │ AND CURRENT SUPPLY TIME │
                         └─────────┬──────────┘
                                   │              ╭202
              YES         ╱────────▼─────────────╲
        ┌───────────────<  FORWARD DRIVING RANGE ? >
        │               ╲ OR REVERSE DRIVING RANGE ?╱
        │                ╲──────────┬──────────────╱
        │                           │ NO
        │                           │                      ╭203
   ┌────▼─────────────┐      ┌──────▼──────────┐
   │ PROHIBIT ENGAGEMENT │╭205 │     SUPPLY      │
   │ OF ENGAGING ELEMENTS │    │ OVEREXCITATION  │
   │ OF TRANSMISSION     │    │    CURRENT      │
   └────┬─────────────┘      └──────┬──────────┘
        │                           │              ╭204
   ┌────▼──────────┐        ╱───────▼────────╲   NO
   │     SUPPLY     │╭206    < CURRENT SUPPLY   >───┐
   │ OVEREXCITATION │        ╲ TIME ELAPSED ?  ╱   │
   │    CURRENT     │         ╲───────┬───────╱    │
   └────┬──────────┘                  │ YES        │
        │              ╭207           │            │
   ╱────▼────────╲  YES               │            │
   < CURRENT SUPPLY >──┐              │            │
   ╲ TIME ELAPSED ?╱   │              │            │
    ╲─────┬──────╱     │              │            │
          │ NO         │              │            │
                       │   ╭208       │            │
              ┌────────▼──────────┐   │            │
              │ PERMIT ENGAGEMENT  │   │            │
              │ OF ENGAGING ELEMENTS │ │            │
              │ OF TRANSMISSION    │   │            │
              └────────┬──────────┘   │            │
                       │              │            │
                       └──────────────┤            │
                                      │   ╭209      │
                              ┌───────▼──────┐      │
                              │ PROGRAM EXIT │      │
                              └───────┬──────┘      │
                                      │             │
                                  ┌───▼────┐        │
                                  │ RETURN │        │
                                  └────────┘        │
```

# FIG.4

OVEREXCITATION CURRENT
OR CURRENT SUPPLY TIME

TEMPERATURE-
COMPENSATED
RANGE

-40°C  -30°C          140°C   165°C        OIL
TEMPERATURE

# FIG.5

OVEREXCITATION CONTROL

CURRENT

NORMAL EXCITATION
CONTROL

OVEREXCITATION CURRENT
(VARIABLE)

TIME

CURRENT SUPPLY TIME
(VARIABLE)

14

# FIG.6

```
              ( START )
                 │
                 ▼
YES        ┌──────────────────┐        101
◄──────────┤ ENGINE STARTED ? ├─────
           └──────────────────┘
                 │ NO
                 ▼
NO     ┌────────────────────────┐      102
◄──────┤   IGNITION ON ? OR     ├────
       │ RESTART ENGINE AT IDLE?│
       └────────────────────────┘
                 │ YES
                 ▼
           ┌──────────────────┐        103
           │  ENGINE CRANKED  │─────
           └──────────────────┘
                 │
                 ▼
           ┌──────────────────┐        104
           │  ENGINE STARTED  │─────
           └──────────────────┘
                 │
                 ▼◄──────────────┐
       ┌────────────────────┐    │     105a
       │ SUFFICIENT CURRENT ├────┘  NO
       │    AVAILABLE ?     │
       └────────────────────┘
                 │ YES
                 ▼
       ┌────────────────────────┐      106
       │ OVEREXCITATION CONTROL │───
       └────────────────────────┘
                 │
                 ▼
              ( RETURN )
```

# FIG.7

START

301

VOLTAGE OF
OIL TEMPERATURE
SENSOR FALL WITHIN
PREDETERMINED
RANGE ?

NO

YES

302

ANY CHANGE IN
VOLTAGE OF OIL
TEMPERATURE
SENSOR DURING
FIXED TIME PERIOD ?

NO

YES

303

SELECT LOW-TEMPERATURE
OVEREXCITATION CURRENT
AND CURRENT SUPPLY TIME

201

DETECT OIL TEMPERATURE
AND DETERMINE
OVEREXCITATION CURRENT
AND CURRENT SUPPLY TIME

202

FORWARD DRIVING RANGE ?
OR REVERSE DRIVING RANGE ?

YES

NO

205

PROHIBIT ENGAGEMENT
OF ENGAGING ELEMENTS
OF TRANSMISSION

203

SUPPLY
OVEREXCITATION
CURRENT

206

SUPPLY
OVEREXCITATION
CURRENT

204

CURRENT SUPPLY
TIME ELAPSED ?

NO

207

CURRENT SUPPLY
TIME ELAPSED ?

NO

YES

YES

208

PERMIT ENGAGEMENT
ON ENGAGING ELEMENTS
OF TRANSMISSION

209

PROGRAM EXIT

RETURN

16

# FIG.8A

# FIG.8B